# EUROPÄISCHE PATENTSCHRIFT

(11) **EP 4 204 287 B1**
(45) Veröffentlichungstag und Bekanntmachung des Hinweises auf die Patenterteilung: **20.11.2024**
(21) Anmeldenummer: 21830414.5
(22) Anmeldetag: 03.12.2021
(51) Int. Cl.: B62H 5/00, E05B 71/00, E05B 67/00

(54) **ZWEIRADSCHLOSS**
TWO-WHEELED VEHICLE LOCK
SERRURE DE VÉHICULE À DEUX ROUES

(30) Priorität: 18.12.2020 DE 102020134110
(43) Veröffentlichungstag der Anmeldung: 05.07.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB
(86) Internationale Anmeldenummer: PCT/EP2021/084205
(87) Internationale Veröffentlichungsnummer: WO 2022/128537

(56) Entgegenhaltungen:
- EP-A1- 0 520 154
- JP-A- 2006 037 431
- JP-A- H10 280 774

## Beschreibung

Die Erfindung betrifft ein Zweiradschloss, insbesondere Fahrradschloss, für eine Einsteckeinheit, insbesondere für ein Einsteckkabel oder eine Einsteckkette.

Schlösser für Zweiräder wie Fahrräder, insbesondere Pedelecs, und Motorräder zum Diebstahlschutz sind in unterschiedlichen Ausführungen bekannt, beispielsweise in Form von Bügelschlössern, Faltschlössern, Kabelschlössern oder Rahmenschlössern. Darüber hinaus sind Einsteckkabel oder -ketten bekannt, die an dem einen Ende mit einer Schlaufe und an dem anderen Ende mit einem Kloben versehen sind. Zum Anschließen des Zweirads an einem festen Objekt wie einem Laternenpfahl oder einem Fahrradständer wird zunächst das Kabel oder die Kette um das feste Objekt gelegt und anschließend der Kloben durch die Schlaufe geführt und in eine am Zweirad befestigte Klobensicherung eingesteckt.

Aus dem Dokument DE 10 2015 103 170 A1 ist es bekannt, eine derartige Klobensicherung in einem Rahmenschloss zu integrieren. Dadurch ist die Klobensicherung jedoch an den Anbringungsort des Rahmenschlosses am Fahrrad gebunden. Darüber hinaus erhöht sich durch die Integration der Klobensicherung in dem Rahmenschloss die Komplexität des Rahmenschlosses.

Die EP 0 520 154 A1 offenbart ein Zweiradschloss mit einer Schließeinheit und einer Hülse, wobei die Schließeinheit eine Klobenaufnahme und einen Schließzylinder aufweist und mit der Klobenaufnahme voran in die Hülse einführbar und in dieser fixierbar ist.

Es ist daher eine Aufgabe der Erfindung, ein Zweiradschloss für eine Einsteckeinheit anzugeben, das unabhängig von einem Rahmenschloss einsetzbar, kostengünstig herstellbar und einfach montierbar ist.

Die Lösung der Aufgabe erfolgt durch ein Zweiradschloss mit den Merkmalen des Anspruchs 1.

Ein erfindungsgemäßes Zweiradschloss umfasst eine Schließeinheit, die zwei entgegengesetzte Stirnseiten aufweist, und eine zur Anbringung an oder in einem Rahmen des Zweirads vorgesehenen Hülse, die eine Längsachse und zwei entgegengesetzte axiale Enden aufweist, wobei an der ersten Stirnseite der Schließeinheit eine Klobenaufnahme vorgesehen ist, in die ein Kloben einer Einsteckeinheit einsteckbar ist und der ein verstellbares Verriegelungselement zugeordnet ist, um einen in die Klobenaufnahme eingesteckten Kloben wahlweise gegen eine Entnahme zu sichern oder für eine Entnahme freizugeben, wobei an der zweiten Stirnseite der Schließeinheit ein mittels eines Schlüssels drehbarer Schließzylinder vorgesehen ist, durch den das Verriegelungselement betätigbar ist, wobei die Hülse am ersten axialen Ende mit einer Stirnwand versehen und am zweiten axialen Ende offen ist, wobei die Schließeinheit mit dem Schließzylinder voran in die Hülse einführbar ist, wobei die Schließeinheit im eingeführten Zustand mittels einer Fixiereinrichtung in der Hülse fixierbar ist, und wobei die Stirnwand der Hülse mit einer Durchlassöffnung zum Durchführen eines in den Schließzylinder einzusteckenden Schlüssels versehen ist.

Die Einsteckeinheit kann um ein festes Objekt wie einen Laternenpfahl herumgeschlungen und dann durch Einstecken des Klobens in die Klobenaufnahme an der Schließeinheit verankert werden. Wenn die Schließeinheit in der Hülse fixiert ist und die Hülse fest mit dem Rahmen des Zweirads verbunden ist, ergibt sich bei eingestecktem Kloben und in der Verriegelungsstellung befindlichem Verriegelungselement eine zuverlässige Sicherung des Zweirads an dem festen Objekt.

Die Montage ist einfach, weil die Schließeinheit lediglich in die Hülse einzuführen und in dieser zu fixieren ist. Die Hülse kann am oder im Rahmen vormontiert sein. Vorzugsweise ist die Fixiereinrichtung für eine lösbare Fixierung ausgelegt, so dass die Schließeinheit bei Bedarf leicht ausgetauscht werden kann.

Die Einsteckeinheit kann beispielsweise ein Einsteckkabel, eine Einsteckkette, ein Einsteckgelenkstab oder dergleichen sein.

Eine einseitig offene Hülse ist einfach und kostengünstig herstellbar. Die Hülse kann einen sich entlang der Längsachse erstreckenden Rohrabschnitt umfassen, beispielsweise in Form eines Hohlprofils aus Stahl. Insbesondere ist die Schließeinheit langgestreckt ausgebildet.

Ein erfindungsgemäßes Zweiradschloss kann einen Deckel zum Abdecken des offenen axialen Endes der Hülse umfassen, wobei der Deckel insbesondere lösbar an der Hülse befestigbar ist und eine Deckelöffnung zum Durchführen eines in die Klobenaufnahme einzusteckenden Klobens aufweist. Durch den Deckel kann die Hülse geschlossen werden, um die Schließeinheit einzuhausen und um einer Beeinträchtigung der Schließeinheit durch Schmutz und Feuchtigkeit entgegenzuwirken. An dem Deckel kann zu diesem Zweck ein Dichtelement, zum Beispiel ein Gummiring, angeordnet sein.

Der Deckel kann an die Hülse anschraubbar sein, um ein schnelles und einfaches Anbringen und Lösen zu ermöglichen.

Gemäß einer Ausführungsform der Erfindung ist zum Anschrauben des Deckels an die Hülse eine Schraubenaufnahme vorgesehen, welche an der Hülse ausgebildet ist und eine parallel zur Längsachse der Hülse verlaufende Schraubenachse definiert. Vorzugsweise ist die Schraubenaufnahme derart angeordnet, dass der Schraubenkopf bei angeschraubtem Deckel und eingestecktem Kloben von einem am Kloben ausgebildetem Kragen abgedeckt ist. Bei abgesperrtem Zweiradschloss ist somit ein Abschrauben des Deckels ausgeschlossen.

Ein erfindungsgemäßes Zweiradschloss kann einen Verschluss zum Abdecken des offenen axialen Endes der Hülse umfassen, wobei der Verschluss fest mit der Schließeinheit verbunden oder einstückig mit dieser ausgeführt ist und an derjenigen Stirnseite der Schließeinheit angeordnet ist, die beim Einführen der Schließeinheit in die Hülse das nachlaufende Ende bildet. Bei dieser Ausgestaltung muss kein separater Deckel bereitgestellt werden.

Eine spezielle Ausgestaltung der Erfindung sieht vor, dass die Fixiereinrichtung Schraubmittel zum Verschrauben der in die Hülse eingeführten Schließeinheit mit der Hülse aufweist. Dies ermöglicht eine schnelle und einfache Fixierung und ein ebenso schnelles und einfaches Lösen. Beispielsweise kann die Fixiereinrichtung wenigstens eine an der Schließeinheit vorgesehene Durchführung sowie wenigstens eine an der Hülse vorgesehene Schraubenaufnahme umfassen, wobei die Durchführung mit der Schraubenaufnahme fluchtet, wenn die Schließeinheit in die Hülse eingeführt ist. Die wenigstens eine Schraubenaufnahme kann hierbei eine Schraubenachse definieren, die quer zur Längsachse der Hülse ausgerichtet ist. In der Hülse kann eine entsprechende Ausnehmung zum Durchführen eines Schraubwerkzeugs vorgesehen sein.

Eine weitere Ausführungsform der Erfindung sieht vor, dass die Schließeinheit ein Gehäuse zur Unterbringung der Klobenaufnahme, des Verriegelungselements und des Schließzylinders aufweist, wobei an dem Gehäuse ein Flansch ausgebildet ist, der mit einem innenliegenden Steg der Hülse verschraubbar ist. Durch eine, insbesondere flächige, Anlage des Flansches am Steg ergibt sich ein stabiler Halt. Der Steg kann insbesondere an einem Innenwandabschnitt der Hülse ausgebildet sein. An dem Steg kann auch eine Schraubenaufnahme für eine in Richtung der Längsachse der Hülse einzuschraubende Schraube vorgesehen sein, so dass der Steg auch zur Befestigung eines wie vorstehend beschriebenen Deckels genutzt werden kann. Bevorzugt erstreckt sich der Steg in Richtung der Längsachse der Hülse.

Gemäß einer weiteren Ausführungsform der Erfindung weist die Fixiereinrichtung Rastmittel zum Verrasten der in die Hülse eingeführten Schließeinheit mit der Hülse auf. Dies gestattet eine werkzeuglose Fixierung. Beispielsweise kann die Fixiereinrichtung wenigstens eine Rastausnehmung und einen mit dieser zusammenwirkenden Rastvorsprung aufweisen, wobei die Rastausnehmung in der Hülse ausgebildet ist und der Rastvorsprung von der Schließeinheit absteht, oder umgekehrt. Um eine stabile Fixierung zu gewährleisten, können zwei bezüglich der Längsachse voneinander beabstandete Anordnungen aus Rastausnehmung und Rastvorsprung vorgesehen sein.

Vorzugsweise ist die Hülse zum Anschweißen an einen Rahmen eines Zweirads oder zum Einschweißen in eine Ausnehmung eines Rahmens eines Zweirads ausgebildet. Für einen Dieb ist es im Allgemeinen nicht möglich, eine festgeschweißte Hülse vom Rahmen zu lösen.

Die Erfindung betrifft auch ein Zweirad, insbesondere Fahrrad, mit einem Rahmen und wenigstens zwei an diesem gelagerten Rädern, wobei ein wie vorstehend beschriebenes Zweiradschloss an oder in dem Rahmen befestigt ist.

Das Zweiradschloss kann eine Einsteckeinheit mit einem Kloben umfassen, die zum Einstecken in die Klobenaufnahme ausgebildet ist. Die Handhabung der Einsteckeinheit ist einfach.

Es kann vorgesehen sein, dass das Zweirad Tretkurbeln zum Erzeugen eines Antriebsmoments umfasst und das Zweiradschloss derart an oder in dem Rahmen befestigt ist, dass der in die Klobenaufnahme eingeführte Kloben der Einsteckeinheit in die Bewegungsbahn einer Tretkurbel hineinragt. Beim Versuch des Tretens schlägt die Tretkurbel am Kloben an. Der Kloben selbst wirkt somit als zusätzliche Sicherung gegen Diebstahl, weil ein Wegfahren mit dem derart gestalteten Zweirad selbst dann nicht möglich ist, wenn die Einsteckeinheit durchtrennt wird. Ein Durchtrennen des Klobens direkt am Rahmen ist dagegen nur schwer möglich.

Weiterbildungen der Erfindungen sind auch den abhängigen Ansprüchen, der nachfolgenden Beschreibung sowie der beigefügten Zeichnung zu entnehmen.

Die Erfindung wird nachfolgend beispielhaft unter Bezugnahme auf die Zeichnung beschrieben.
- Fig. 1: ist eine perspektivische Darstellung eines Zweiradschlosses, insbesondere Fahrradschlosses, gemäß einer Ausführungsform der Erfindung von vorn.
- Fig. 2: zeigt das Zweiradschloss gemäß Fig. 1 von hinten.
- Fig. 3: zeigt eine Schließeinheit des gemäß Fig. 1 gestalteten Zweiradschlosses von vorn gemeinsam mit einem in eine Klobenaufnahme der Schließeinheit einzusteckenden Kloben.
- Fig. 4: zeigt die Schließeinheit gemäß Fig. 3 von hinten.
- Fig. 5: ist eine vereinfachte Vorderansicht einer Hülse des in Fig. 1 dargestellten Zweiradschlosses, die ohne Deckel dargestellt ist.
- Fig. 6: ist eine Explosionsdarstellung eines Zweiradschlosses gemäß einer ersten nicht erfindungsgemäßen Ausführungsform.
- Fig. 7: ist eine Explosionsdarstellung eines Zweiradschlosses gemäß einer zweiten nicht erfindungsgemäßen Ausführungsform.

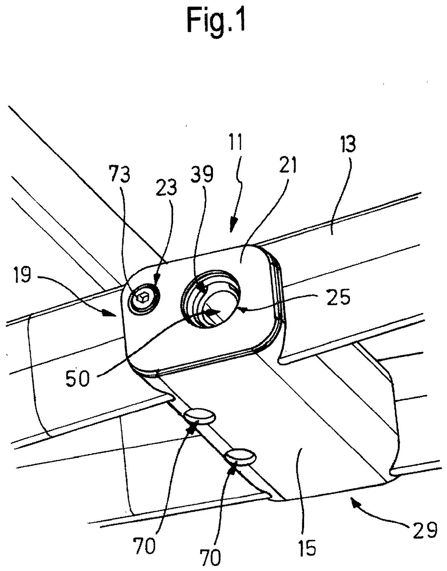

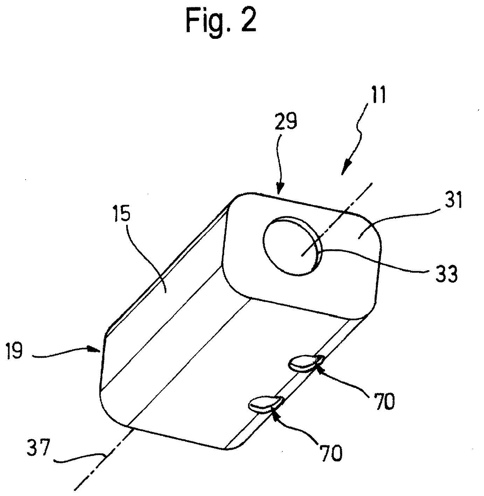

Das in Fig. 1 gezeigte, gemäß einer Ausführungsform der Erfindung gestaltete Zweiradschloss 11, insbesondere Fahrradschloss, ist in einen Rahmen 13 eines Fahrrads integriert. Speziell umfasst das Schloss 11 eine längliche Hülse 15, die in den Rahmen 13 eingeschweißt ist. Die Hülse 15 ist vorzugsweise aus einem Stahlprofil gefertigt. An einem ersten axialen Ende 29 ist die Hülse 15 mit einer Stirnwand 31 verschlossen (Fig. 2), die mit einer Durchlassöffnung 33 versehen ist. An ihrem entgegengesetzten zweiten axialen Ende 19 ist die Hülse 15 offen und durch einen Deckel 21 (Fig. 1) abgedeckt. Der Begriff "axial" ist hierbei bezüglich einer Längsachse 37 der Hülse 15 zu verstehen. Der Deckel 21 ist mit einem Schraubloch 23 sowie einer Deckelöffnung 25 versehen.

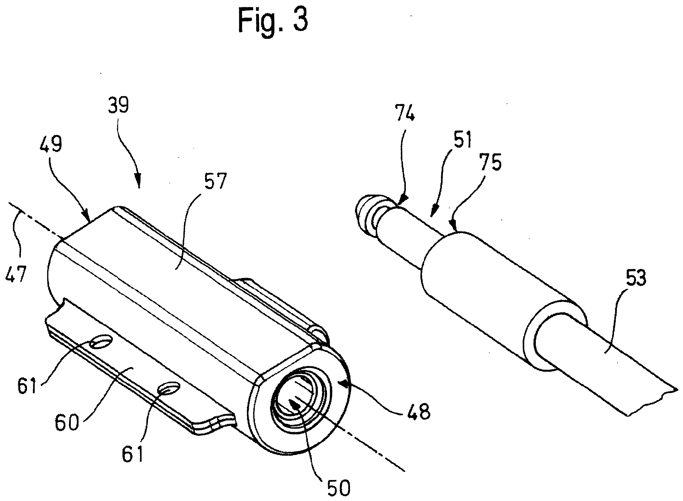

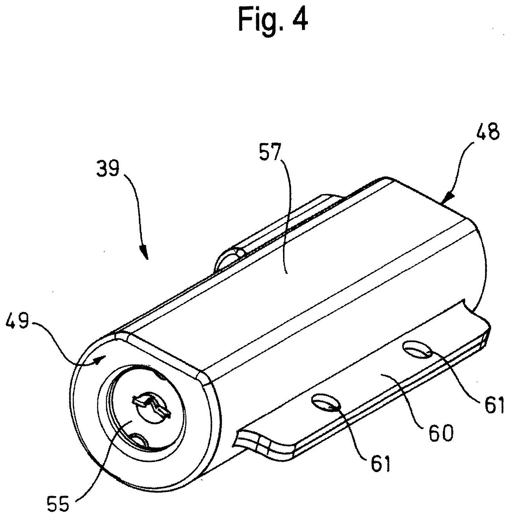

In der Hülse 15 befindet sich eine Schließeinheit 39 des Zweiradschlosses 11, welche in den Fig. 3 und 4 einzeln gezeigt ist. Diese weist eine Längsachse 47 sowie zwei entgegengesetzte Stirnseiten 48, 49 auf.

An der in Fig. 3 zum Betrachter weisenden Stirnseite 48 ist eine Klobenaufnahme 50 vorgesehen, in die ein Kloben 51 einer nur teilweise dargestellten Einsteckeinheit 53 einsteckbar ist. Bei dem gezeigten Ausführungsbeispiel ist die Einsteckeinheit 53 ein Einsteckkabel. Der Klobenaufnahme 50 ist in grundsätzlich bekannter Weise ein verstellbares Verriegelungselement zugeordnet, das in den Figuren jedoch nicht sichtbar ist. Das Verriegelungselement ist zwischen einer Verriegelungsstellung und einer Freigabestellung verstellbar und dient dazu, den in die Klobenaufnahme 50 eingesteckten Kloben 51 wahlweise gegen eine Entnahme zu sichern oder für eine Entnahme freizugeben. Die Verriegelungsmechanik kann beispielsweise wie in der DE 10 2015 103 170 A1 offenbart gestaltet sein.

Zur Betätigung des Verriegelungselements zumindest in die Freigabestellung ist ein drehbarer Schließzylinder 55 (Fig. 4) vorgesehen, welcher sich an der zweiten Stirnseite 49 der Schließeinheit 39 befindet und mittels eines nicht dargestellten Schlüssels gedreht werden kann. Die Klobenaufnahme 50 und der Schließzylinder 55 sind in einem Gehäuse 57 der Schließeinheit 39 untergebracht, welches vorzugsweise aus Kunststoff gefertigt ist.

Bei der Montage des Zweiradschlosses 11 wird die Schließeinheit 39 mit dem Schließzylinder 55 voran durch das offene axiale Ende 19 in die Hülse 15 eingeführt, und zwar in axialer Richtung. Im eingeführten Zustand verläuft die Längsachse 47 der Schließeinheit 39 parallel zur Längsachse 37 der Hülse 15. Ferner fluchtet der Schließzylinder 55 mit der Durchlassöffnung 33.

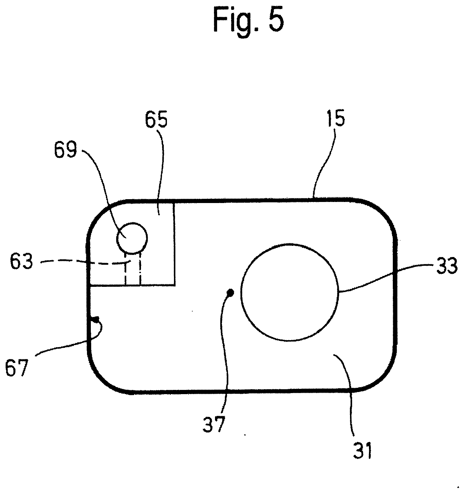

Anschließend wird die Schließeinheit 39 mit der Hülse 15 verschraubt. Zu diesem Zweck ist an dem Gehäuse 57 der Schließeinheit 39 ein Flansch 60 ausgebildet, der sich parallel zur Längsachse 47 der Schließeinheit 39 erstreckt und mit zwei Durchführungen 61 versehen ist. Durch diese können nicht gezeigte Schrauben geführt werden, welche quer zur Längsachse 37 in Schraubenaufnahmen 63 (Fig. 5) der Hülse 15 einschraubbar sind. Wie in der deckelfreien Vorderansicht gemäß Fig. 5 erkennbar ist, sind die quer zur Längsachse 37 verlaufenden Schraubenaufnahmen 63 in einem Steg 65 gebildet, der an einer Innenwand 67 der Hülse 15 gebildet ist und sich entlang der Längsachse 37 der Hülse 15 erstreckt. In dem Steg 65 ist auch eine parallel zur Längsachse 37 verlaufende Schraubenaufnahme 69 vorgesehen. Im eingeführten Zustand der Schließeinheit 39 liegt der Flansch 60 bündig am Steg 65 an und die Durchführungen 61 fluchten mit den Schraubenaufnahmen 63, so dass die Schließeinheit 39 in der Hülse 15 festgeschraubt werden kann. Das heißt die Durchführungen 61 und die Schraubenaufnahmen 63 bilden zusammen mit den zugehörigen Schrauben eine Fixiereinrichtung zum Fixieren der Schließeinheit 39 in der Hülse 15. Zur Handhabung eines Schraubwerkzeugs (nicht dargestellt) sind in der Hülse 15 zwei Zugangsöffnungen 70 ausgebildet, wie in Fig. 1 und 2 erkennbar ist. Gemäß einer nicht gezeigten Ausführungsform sind die Zugangsöffnungen mit Aufnahmen für Senkköpfe von Senkkopfschrauben versehen. Diese Aufnahmen können mit Dichtungen versehen sein, um ein Eindringen von Feuchtigkeit in die Hülse zu verhindern.

Wenn die Schließeinheit 39 in der Hülse 15 festgeschraubt ist, wird der Deckel 21 so auf das offene axiale Ende 19 der Hülse 15 aufgesetzt, dass das Schraubloch 23 mit der Schraubenaufnahme 69 (Fig. 5) fluchtet. Durch Eindrehen einer Schraube 73 kann der Deckel 21 dann fest mit der Hülse 15 verbunden werden, wie dies in Fig. 1 gezeigt ist, wobei die Klobenaufnahme 50 mit der Deckelöffnung 25 fluchtet.

Zum Abschließen des Fahrrads wird die Einsteckeinheit 53 an einem Laternenpfahl oder einem ähnlichen Objekt befestigt und der Kloben 51 wird in die Klobenaufnahme 50 eingesteckt. Das Verriegelungselement wird in die Verriegelungsstellung gestellt, entweder aufgrund einer Vorspannung, wie es in der DE 10 2015 103 170 A1 der Fall ist, oder durch Drehen des Schließzylinders 55, so dass der Kloben 51 über die Klobenaufnahme 50 und die Hülse 15 fest am Rahmen 13 verankert ist. Das Verriegelungselement ragt hierbei in der Verriegelungsstellung derart in die Klobenaufnahme 50 hinein, dass es in eine Nut 74 des Klobens 51 eingreift. Die Schraube 73 ist in diesem Zustand des Zweiradschlosses 11 von einem Kragen 75 des Klobens 51 verdeckt, so dass sie nicht zugänglich ist. Ein Lösen der Schraube 73 und eine Abnahme des Deckels 21, beispielsweise für einen Austausch der Schließeinheit 39, sind nur dann möglich, wenn der Kloben 51 aus der Klobenaufnahme 50 entnommen ist.

Zum Freigeben des Fahrrads wird das Verriegelungselement durch Drehen des Schließzylinders 55 mit einem Schlüssel in die Freigabestellung bewegt und der Kloben 51 wird aus der Klobenaufnahme 50 entnommen.

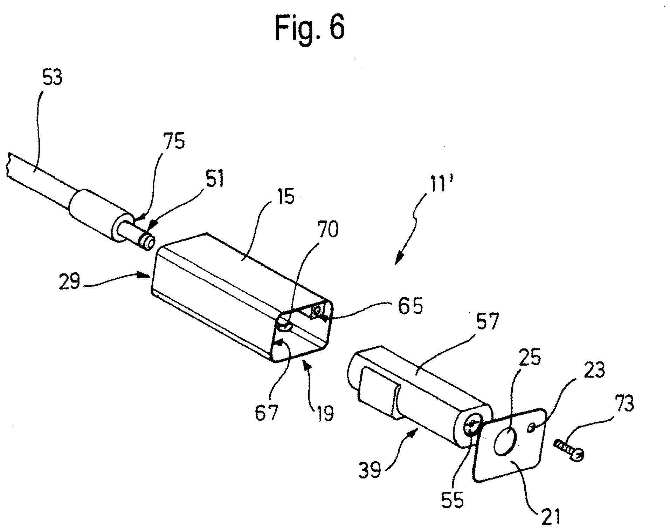

Eine erste Ausführungsform eines nicht erfindungsgemäßen Zweiradschlosses 11' ist in Fig. 6 gezeigt, wobei gleiche oder äquivalente Bauteile mit den gleichen Bezugszeichen bezeichnet sind wie in Fig. 1-5. Im Unterschied zur erfindungsgemäßen Ausführungsform ist bei dem in Fig. 6 gezeigten Zweiradschloss 11' die Schließeinheit 39 mit der Klobenaufnahme 50 voran in die Hülse 15 einzuführen. Die Anordnung des Stegs 65 ist entsprechend gewählt. Wenn die Schließeinheit 39 in die Hülse 15 eingeführt ist, fluchtet die Deckelöffnung 25 mit dem Schließzylinder 55, während die Durchlassöffnung 33 (Fig. 2) mit der Klobenaufnahme 50 fluchtet. Im Übrigen wird das Zweiradschloss 11' montiert und benutzt wie das Zweiradschloss 11 gemäß der erfindungsgemäßen Ausführungsform. Da der Kopf der Schraube 73 bei dem in Fig. 6 gezeigten Ausführungsbeispiel frei zugänglich ist, kann der Deckel 21 auch im abgesperrten Zustand des Zweiradschlosses 11' abgenommen werden. Eine Entnahme der Schließeinheit 39 aus der Hülse 15 ist dadurch jedoch nicht möglich, selbst wenn zusätzlich noch die Schrauben gelöst sind, welche zur Verbindung des Flansches 60 mit dem Steg 65 vorgesehen sind. Solange sich der Kloben 51 durch das Verriegelungselement gesichert in der Klobenaufnahme 50 befindet und der Kragen 75 des Klobens 51 die Durchlassöffnung 33 der Stirnwand 31 der Hülse 15 übergreift, ist die Schließeinheit 39 in der Hülse 15 gehalten.

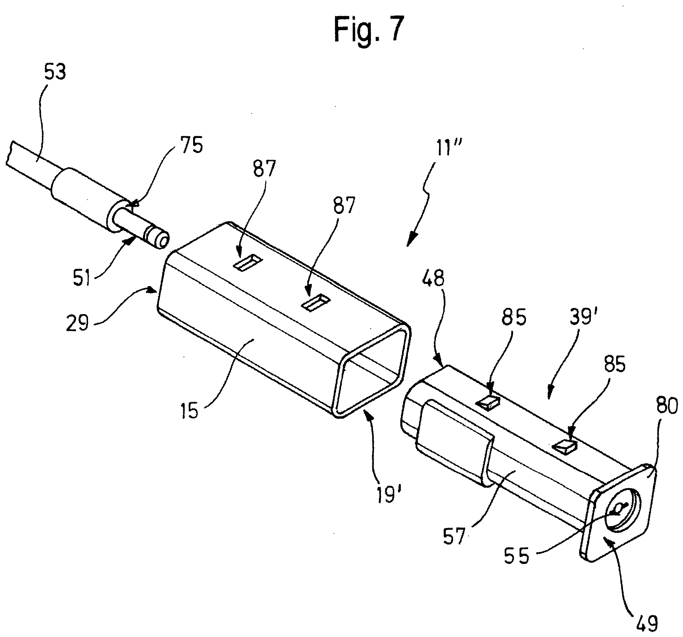

Eine zweite Ausführungsform eines nicht erfindungsgemäßen Zweiradschlosses 11" ist in Fig. 7 gezeigt. Wie bei der ersten nicht erfindungsgemäßen Ausführungsform ist bei dem in Fig. 7 gezeigten Zweiradschloss 11" die Schließeinheit 39` mit der Klobenaufnahme 50 voran in die Hülse 15 einzuführen. Anstelle eines separaten Deckels ist zum Abdecken des offenen axialen Endes 19 der Hülse 15 jedoch ein, zum Beispiel plattenartiger, Verschluss 80 vorgesehen, der mit der Schließeinheit 39` verbunden ist. Insbesondere kann der Verschluss 80 an das Gehäuse 57 der Schließeinheit 39` angeformt sein.

Weiterhin sind zwei Rastnasen 85 an das Gehäuse 57 angeformt. Diese wirken mit Rastausnehmungen 87 der Hülse 15 zusammen. Beim Einführen der Schließeinheit 39' in die Hülse 15 schnappen die Rastnasen 85 in die Rastausnehmungen 87 ein und halten die Schließeinheit 39' in der Hülse 15. Ein Anschrauben des Verschlusses 80 an der Hülse 15 ist dementsprechend nicht erforderlich. Die Fixiereinrichtung zum Fixieren der Schließeinheit 39' in der Hülse 15 beruht hier also nicht auf einer Schraubverbindung, sondern auf einer Rastverbindung.

### Bezugszeichenliste:

- 11, 11', 11": Zweiradschloss
- 13: Rahmen
- 15: Hülse
- 19: zweites axiales Ende
- 21: Deckel
- 23: Schraubloch
- 25: Deckelöffnung
- 29: erstes axiales Ende
- 31: Stirnwand
- 33: Durchlassöffnung
- 37: Längsachse der Hülse
- 39, 39': Schließeinheit
- 47: Längsachse der Schließeinheit
- 48: erste Stirnseite
- 49: zweite Stirnseite
- 50: Klobenaufnahme
- 51: Kloben
- 53: Einsteckeinheit
- 55: Schließzylinder
- 57: Gehäuse
- 60: Flansch
- 61: Durchführung
- 63: Schraubenaufnahme
- 65: Steg
- 67: Innenwand
- 69: Schraubenaufnahme
- 70: Zugangsöffnung
- 73: Schraube
- 74: Nut
- 75: Kragen
- 80: Verschluss
- 85: Rastnase
- 87: Rastausnehmung

## Patentansprüche

1. Zweiradschloss (11), insbesondere Fahrradschloss, für eine Einsteckeinheit (53), insbesondere für ein Einsteckkabel oder eine Einsteckkette,
mit einer Schließeinheit (39, 39'), die zwei entgegengesetzte Stirnseiten (48, 49) aufweist, und einer zur Anbringung an oder in einem Rahmen (13) des Zweirads vorgesehenen Hülse (15), die eine Längsachse (37) und zwei entgegengesetzte axiale Enden (19, 29) aufweist,
wobei an der ersten Stirnseite (48) der Schließeinheit (39, 39') eine Klobenaufnahme (50) vorgesehen ist, in die ein Kloben (51) einer Einsteckeinheit (53) einsteckbar ist und der ein verstellbares Verriegelungselement zugeordnet ist, um einen in die Klobenaufnahme (50) eingesteckten Kloben (51) wahlweise gegen eine Entnahme zu sichern oder für eine Entnahme freizugeben,
wobei an der zweiten Stirnseite (49) der Schließeinheit (39, 39') ein mittels eines Schlüssels drehbarer Schließzylinder (55) vorgesehen ist, durch den das Verriegelungselement betätigbar ist,
wobei die Hülse (15) am ersten axialen Ende (29) mit einer Stirnwand (31) versehen und am zweiten axialen Ende (19) offen ist, wobei die Schließeinheit (39, 39') mit dem Schließzylinder (55) voran in die Hülse (15) einführbar ist,
wobei die Schließeinheit (39, 39') im eingeführten Zustand mittels einer Fixiereinrichtung (61, 63, 85, 87) in der Hülse (15) fixierbar ist, und
wobei die Stirnwand (31) der Hülse (15) mit einer Durchlassöffnung (33) zum Durchführen eines in den Schließzylinder (55) einzusteckenden Schlüssels versehen ist.

2. Zweiradschloss nach Anspruch 1,
umfassend einen Deckel (21) zum Abdecken des offenen axialen Endes (19) der Hülse (15), wobei der Deckel (21) insbesondere lösbar an der Hülse (15) befestigbar ist und eine Deckelöffnung (25) zum Durchführen eines in die Klobenaufnahme (50) einzusteckenden Klobens (51) aufweist.

3. Zweiradschloss nach Anspruch 2,
wobei der Deckel (21) an die Hülse (15) anschraubbar ist.

4. Zweiradschloss nach Anspruch 3,
wobei zum Anschrauben des Deckels (21) an die Hülse (15) eine Schraubenaufnahme (69) vorgesehen ist, welche an der Hülse (15) ausgebildet ist und eine parallel zur Längsachse (37) der Hülse (15) verlaufende Schraubenachse definiert.

5. Zweiradschloss nach Anspruch 1,
umfassend einen Verschluss (80) zum Abdecken des offenen axialen Endes (19) der Hülse (15), wobei der Verschluss (80) fest mit der Schließeinheit (39') verbunden oder einstückig mit dieser ausgeführt ist und an derjenigen Stirnseite (49) der Schließeinheit (39') angeordnet ist, die beim Einführen der Schließeinheit (39') in die Hülse (15) das nachlaufende Ende bildet.

6. Zweiradschloss nach einem der vorstehenden Ansprüche,
wobei die Fixiereinrichtung Schraubmittel zum Verschrauben der in die Hülse (15) eingeführten Schließeinheit (39, 39') mit der Hülse (15) aufweist.

7. Zweiradschloss nach Anspruch 6,
wobei die Schließeinheit (39, 39') ein Gehäuse (57) zur Unterbringung der Klobenaufnahme (50), des Verriegelungselements und des Schließzylinders (55) aufweist, und wobei an dem Gehäuse (57) ein Flansch (60) ausgebildet ist, der mit einem innenliegenden Steg (65) der Hülse (15) verschraubbar ist.

8. Zweiradschloss nach einem der vorstehenden Ansprüche,
wobei die Fixiereinrichtung Rastmittel (85, 87) zum Verrasten der in die Hülse (15) eingeführten Schließeinheit (39') mit der Hülse (15) aufweist.

9. Zweiradschloss nach einem der vorstehenden Ansprüche,
wobei die Hülse (15) zum Anschweißen an einen Rahmen (13) eines Zweirads oder zum Einschweißen in eine Ausnehmung eines Rahmens (13) eines Zweirads ausgebildet ist.

10. Zweirad, insbesondere Fahrrad, mit einem Rahmen (13) und wenigstens zwei an diesem gelagerten Rädern, wobei ein Zweiradschloss (11) nach wenigstens einem der vorstehenden Ansprüche an oder in dem Rahmen (13) befestigt ist.

11. Zweirad nach Anspruch 10,
wobei das Zweiradschloss (11) eine Einsteckeinheit (53) mit einem Kloben (51) umfasst, die zum Einstecken in die Klobenaufnahme (50) ausgebildet ist.

12. Zweirad nach Anspruch 11,
wobei das Zweirad Tretkurbeln zum Erzeugen eines Antriebsmoments umfasst und das Zweiradschloss (11) derart an oder in dem Rahmen (13) befestigt ist, dass der in die Klobenaufnahme (50) eingeführte Kloben (51) der Einsteckeinheit (53) in die Bewegungsbahn einer Tretkurbel hineinragt.

## Claims

1. A two-wheeler lock (11), in particular a bicycle lock, for an insertion unit (53), in particular for an insertion cable or an insertion chain,
said two-wheeler lock (11) comprising a locking unit (39, 39'), which has two opposite end faces (48, 49), and a sleeve (15) which is provided for attachment to or in a frame (13) of the two-wheeler and which has a longitudinal axis (37) and two opposite axial ends (19, 29),
wherein a bolt receiver (50), into which a bolt (51) of an insertion unit (53) can be inserted and with which an adjustable locking element is associated, is provided at the first end face (48) of the locking unit (39, 39') in order to selectively secure a bolt (51) inserted into the bolt receiver (50) against a removal or to release it for a removal,
wherein a lock cylinder (55), which is rotatable by means of a key and by which the locking element can be actuated, is provided at the second end face (49) of the locking unit (39, 39'),
wherein the sleeve (15) is provided with an end wall (31) at the first axial end (29) and is open at the second axial end (19), wherein the locking unit (39, 39') can be introduced with the lock cylinder (55) at the front into the sleeve (15),
wherein, in the introduced state, the locking unit (39, 39') can be fixed in the sleeve (15) by means of a fixing device (61, 63, 85, 87), and
wherein the end wall (31) of the sleeve (15) is provided with a passage opening (33) for the leading through of a key to be inserted into the lock cylinder (55).

2. A two-wheeler lock according to claim 1,
comprising a cover (21) for covering the open axial end (19) of the sleeve (15), wherein the cover (21) can be, in particular releasably, fastened to the sleeve (15) and has a cover opening (25) for the leading through of a bolt (51) to be inserted into the bolt receiver (50).

3. A two-wheeler lock according to claim 2,
wherein the cover (21) can be screwed onto the sleeve (15).

4. A two-wheeler lock according to claim 3,
wherein a screw mount (69), which is formed at the sleeve (15) and which defines a screw axis extending in parallel with the longitudinal axis (37) of the sleeve (15), is provided for screwing the cover (21) onto the sleeve (15).

5. A two-wheeler lock according to claim 1,
comprising a closure (80) for covering the open axial end (19) of the sleeve (15), wherein the closure (80) is fixedly connected to the locking unit (39') or is designed in one piece therewith and is arranged at that end face (49) of the locking unit (39') which forms the trailing end on the introduction of the locking unit (39') into the sleeve (15).

6. A two-wheeler lock according to any one of the preceding claims,
wherein the fixing device has screwing means for screwing the locking unit (39, 39') introduced into the sleeve (15) to the sleeve (15).

7. A two-wheeler lock according to claim 6,
wherein the locking unit (39, 39') has a housing (57) for accommodating the bolt receiver (50), the locking element and the lock cylinder (55), and wherein a flange (60), which can be screwed to an inwardly disposed web (65) of the sleeve (15), is formed at the housing (57).

8. A two-wheeler lock according to any one of the preceding claims,
wherein the fixing device has latching means (85, 87) for latching the locking unit (39') introduced into the sleeve (15) to the sleeve (15).

9. A two-wheeler lock according to any one of the preceding claims,
wherein the sleeve (15) is configured for a welding to a frame (13) of a two-wheeler or for a welding into a recess of a frame (13) of a two-wheeler.

10. A two-wheeler, in particular a bicycle, comprising a frame (13) and at least two wheels supported thereat, wherein a two-wheeler lock (11) according to at least one of the preceding claims is fastened to or in the frame (13).

11. A two-wheeler according to claim 10,
wherein the two-wheeler lock (11) comprises an insertion unit (53) which has a bolt (51) and which is configured for insertion into the bolt receiver (50).

12. A two-wheeler according to claim 11,
wherein the two-wheeler comprises pedal cranks for generating a drive torque and the two-wheeler lock (11) is fastened to or in the frame (13) such that the bolt (51) of the insertion unit (53) introduced into the bolt receiver (50) projects into a movement path of a pedal crank.

## Revendications

1. Antivol pour deux-roues (11), en particulier antivol pour bicyclette, destiné à une unité à enficher (53), en particulier à un câble à enficher ou à une chaîne à enficher,
comprenant une unité de fermeture (39, 39') qui présente deux faces frontales opposées (48, 49), et une douille (15) qui est prévue pour être montée sur ou dans un cadre (13) du deux-roues et qui présente un axe longitudinal (37) et deux extrémités axiales opposées (19, 29),
dans lequel
un logement de gond (50) est prévu sur la première face frontale (48) de l'unité de fermeture (39, 39'), logement dans lequel un gond (51) d'une unité à enficher (53) peut être enfiché et auquel est associé un élément de verrouillage réglable pour, au choix, empêcher un gond (51), enfiché dans le logement de gond (50), d'être retiré, ou pour le libérer en vue d'un retrait, un cylindre de fermeture (55) pouvant être tourné au moyen d'une clé est prévu sur la deuxième face frontale (49) de l'unité de fermeture (39, 39'), lequel permet d'actionner l'élément de verrouillage,
la douille (15) est pourvue d'une paroi frontale (31) à la première extrémité axiale (29) et est ouverte à la deuxième extrémité axiale (19), l'unité de fermeture (39, 39') pouvant être insérée dans la douille (15) avec le cylindre de fermeture (55) en avant,
l'unité de fermeture (39, 39'), à l'état inséré, peut être fixée dans la douille (15) au moyen d'un dispositif de fixation (61, 63, 85, 87), et
la paroi frontale (31) de la douille (15) est pourvue d'une ouverture de passage (33) pour le passage d'une clé à insérer dans le cylindre de fermeture (55).

2. Antivol pour deux-roues selon la revendication 1,
comprenant un couvercle (21) pour recouvrir l'extrémité axiale ouverte (19) de la douille (15), le couvercle (21) pouvant être fixé en particulier de manière amovible sur la douille (15) et présentant une ouverture de couvercle (25) pour le passage d'un gond (51) à enficher dans le logement de gond (50).

3. Antivol pour deux-roues selon la revendication 2,
dans lequel le couvercle (21) peut être vissé sur la douille (15).

4. Antivol pour deux-roues selon la revendication 3,
dans lequel, pour visser le couvercle (21) sur la douille (15), il est prévu un logement de vis (69) qui est formé sur la douille (15) et qui définit un axe de vis s'étendant parallèlement à l'axe longitudinal (37) de la douille (15).

5. Antivol pour deux-roues selon la revendication 1,
comprenant un obturateur (80) pour recouvrir l'extrémité axiale ouverte (19) de la douille (15), l'obturateur (80) étant solidaire de l'unité de fermeture (39') ou étant réalisé d'une seule pièce avec celle-ci et étant disposé sur la face frontale (49) de l'unité de fermeture (39') qui forme l'extrémité arrière lors de l'insertion de l'unité de fermeture (39') dans la douille (15).

6. Antivol pour deux-roues selon l'une des revendications précédentes,
dans lequel le dispositif de fixation comprend des moyens de vissage pour visser l'unité de fermeture (39, 39'), insérée dans la douille (15), sur la douille (15).

7. Antivol pour deux-roues selon la revendication 6,
dans lequel l'unité de fermeture (39, 39') comprend un boîtier (57) pour accueillir le logement de gond (50), l'élément de verrouillage et le cylindre de fermeture (55), et
une bride (60) est formée sur le boîtier (57), laquelle peut être vissée sur une nervure intérieure (65) de la douille (15).

8. Antivol pour deux-roues selon l'une des revendications précédentes,
dans lequel le dispositif de fixation comporte des moyens d'encliquetage (85, 87) pour faire encliqueter l'unité de fermeture (39'), insérée dans la douille (15), sur la douille (15).

9. Antivol pour deux-roues selon l'une des revendications précédentes,
dans lequel la douille (15) est conçue pour être soudée sur un cadre (13) d'un deux-roues ou pour être soudée dans un évidement d'un cadre (13) d'un deux-roues.

10. Deux-roues, en particulier bicyclette, comprenant un cadre (13) et au moins deux roues montées sur celui-ci, un antivol pour deux-roues (11) selon l'une au moins des revendications précédentes étant fixé sur ou dans le cadre (13).

11. Deux-roues selon la revendication 10,
dans lequel l'antivol pour deux-roues (11) comprend une unité à enficher (53) pourvue d'un gond (51) conçu pour être enfiché dans le logement de gond (50).

12. Deux-roues selon la revendication 11,
dans lequel le deux-roues comprend des manivelles de pédalier pour générer un couple d'entraînement, et l'antivol pour deux-roues (11) est fixé sur ou dans le cadre (13) de telle sorte que le gond (51) de l'unité à enficher (53), inséré dans le logement de gond (50), pénètre dans la trajectoire de mouvement d'une manivelle de pédalier.
